# EUROPÄISCHE PATENTSCHRIFT

(11) **EP 1 611 262 B1**
(45) Veröffentlichungstag und Bekanntmachung des Hinweises auf die Patenterteilung: **16.05.2007**
(21) Anmeldenummer: 04725068.3
(22) Anmeldetag: 01.04.2004
(51) Int. Cl.: C22C 47/20

(54) **VERFAHREN ZUR VERSTEIFUNG EINES BAUTEILS AUS VERFORMBAREM ZELLULARMATERIAL, DER BAUTEIL UND SEINE VERWENDUNG**
METHOD FOR STRENGTHENING A COMPONENT CONSISTING OF A DEFORMABLE CELLULAR MATERIAL, SAID COMPONENT AND THE USE THEREOF
PROCEDE POUR RIGIDIFIER UN COMPOSANT CONSTITUE D'UNE MATIERE CELLULAIRE DEFORMABLE, UN TEL COMPOSANT ET SON UTILISATION

(30) Priorität: 04.04.2003 SK 4252003
(43) Veröffentlichungstag der Anmeldung: 04.01.2006
(73) Patentinhaber: Ustav materiálov a mechaniky strojov Slovenskej akadémie vied, 83102 Bratislava (SK)
(72) Erfinder: SIMANC K, Frantisek, 85101 Bratislava (SK); JERZ, Jaroslav, 82106 Bratislava (SK)
(74) Vertreter: Biehl, Christian
(86) Internationale Anmeldenummer: PCT/EP2004/050419
(87) Internationale Veröffentlichungsnummer: WO 2004/087981

(56) Entgegenhaltungen:
- DE-A- 2 658 673
- DE-A- 4 214 335
- DE-A- 4 426 627
- DE-A- 19 505 969
- GB-A- 1 534 375
- US-A- 3 873 392
- PATENT ABSTRACTS OF JAPAN Bd. 2000, Nr. 14, 5. März 2001 (2001-03-05) & JP 2000 320852 A (MITSUBISHI KAGAKU SANSHI CORP), 24. November 2000 (2000-11-24)

## Beschreibung

### Technisches Umfeld

Die Erfindung betrifft einen Bauteil aus einem verformbaren Zellularmaterial, der mit einer Verstärkung versteift ist, das Verfahren zu seiner Herstellung und seine Verwendung.

Die aus Metallschaum oder anderen Zellularmaterialen hergestellten Bauteile erfüllen oft nicht die erwarteten mechanischen Eigenschaften, weil sie auf fatales Versagen bei einer Zugbeanspruchung sehr anfällig sind. Solches Versagen entsteht dadurch, dass sich offene Poren auf der Schaumoberfläche oder Risse, welche als Spannungskonzentratoren wirken, ausdehnen. Alle Bauteile, welche aus geschäumten Teilen durch Sägen, Drehen, Fräsen oder durch andere mechanische Bearbeitung hergestellt wurden, haben auf ihren Oberflächen offene Poren, weil die ursprüngliche, relativ kompakte Oberflächenschicht des Schaums durch die mechanische Bearbeitung entfernt wurde. Die Eigenschaften der Schaumteile sind aber oft auch dann nicht ausreichend, wenn die Oberflächenschicht nicht durch mechanische Bearbeitung entfernt wurde, weil ihre Dicke meistens ungleichmäßig ist und die Schicht oft viele Mikrorisse enthält. Aus diesen Gründen können zellulare Metalle für Konstruktionszwecke nicht allein verwendet werden, und der Metallschaum wird deswegen nur als Füllstoff in Hohlprofilen oder als Dauerkem in Sandwichteilen oder Gussstücken benutzt.

Soll man den Metallschaum für Konstruktionszwecke verwenden, dann ist es notwendig, seine Oberfläche, besonders den Teil, der auf Zug beansprucht wird, zu verfestigen. Gegenwärtig werden folgende Verfahren zum Versteifen der Oberfläche verschiedener Metallschaumteile verwendet:

Eine Methode, bei der sich die Oberfläche des Metallschaums während des Aufschäumens verfestigt, ist in dem österreichischen Patent
AT 408317 B--.
beschrieben. Nach diesem Patent werden die Metallschaumteile aus einem schäumfähigen Halbzeug, welches durch Kompaktieren einer Mischung des Metallpulvers und des Treibmittels hergestellt wird, erzeugt, wobei das in der Schaumform eingelegte Halbzeug auf die Schmelztemperatur erwärmt wird, bei der die aus dem Treibmittel sich lösenden Gase in der Metallschmelze Blasen bilden. Wenn man im Hohlraum der Form vor dem Aufschäumen außer schäumfähigem Halbzeug mindestens eine Verstärkung einlegt, deren Schmelztemperatur höher ist als die Schmelztemperatur des schäumfähigen Halbzeugs, dann kontaktiert der flüssige Schaum während des Aufschäumens diese Verstärkung, und nach dem Erstarren bleibt diese mit dem Metallschaum fest verbunden. Wenn bei dieser Methode ein Metallgitter, ein Gewebe, ein Streckmetall oder ein Lochblech vor dem Aufschäumen als Verstärkung zur Oberfläche des Hohlraumes der Schaumform beigelegt wird, dann fließt der Metallschaum während des Aufschäumens durch die Öffnungen in dieser Verstärkung zumindest teilweise über, und die Verstärkung bleibt nach dem Erstarren mit dem Metallschaum fest vereinigt.

Der Nachteil dieser Methode liegt darin, dass die Schaumoberfläche nur während des Aufschäumens verstärkt werden kann. Eine nachträgliche Verstärkung, z.B. geschnittener Schaumoberflächen, lässt sich mit dieser Methode nicht realisieren. Gleichfalls ist es bei dieser Methode unmöglich, eine Verstärkung aus einem Material anzuwenden, dessen Schmelztemperatur niedriger oder gleich wie die Schmelztemperatur des Schaums ist. Ein Versteifen der Oberfläche von Aluminiumschaum z. B. durch ein Aluminiumgitter wäre nicht möglich, weil das versteifende Gitter schmelzen würde. Ein weiterer Nachteil besteht darin, dass es unter dem Einfluss der Temperatur oder infolge einer Reaktion mit geschmolzenem Schaum zur Verschlechterung der mechanischen Eigenschaften der Verstärkung kommen kann. Zum Beispiel würde sich eine Kupferverstärkung bei diesem Verfahren in geschmolzenem Aluminiumschaum zum Teil auflösen, obwohl die Schmelztemperatur der Kupferverstärkung höher als die Schmelztemperatur des Aluminiums ist.

Nach einer in dem deutschen Patent
DE 4426627 C-.
beschriebenen Methode werden die Oberflächen des schäumfähigen Halbzeugs, welches durch Kompaktieren einer Mischung des Metallpulvers und des Treibmittels hergestellt wird, mit nichtschäumfähigen Metallschichten walzplattiert, wobei diese Schichten nach Aufschäumen des Halbzeugs mit der Oberfläche des Metallschaums fest verbunden bleiben. Auf dieser Weise kann die Oberfläche des Metallschaums auch nur während der Fertigung des Schaumteils verstärkt werden. Weil bei dieser Methode das schäumfähige Halbzeug schmelzen muss, kann es auch hier zur Verschlechterung der mechanischen Eigenschaften der Verstärkung infolge erhöhter Temperatur oder einer Reaktion mit dem geschmolzenen Schaum kommen. Ein weiterer Nachteil dieser Methode besteht darin, dass die nichtschäumfähige Metallschicht der Oberfläche des schäumfähigen Halbzeugs folgen muss und infolgedessen diese Methode nur dann benutzt werden kann, wenn die Geometrie der Verstärkung für das Walzplattieren geeignet ist. Weiterhin muss die Gestaltung und Größe der Halbzeugoberfläche ähnlich wie die Schaumoberfläche nach Halbzeugsexpansion sein, was die Flexibilität des Herstellungsprozesses beträchtlich verringert und seinen Preis erhöht. Auch ist die partielle Verstärkung des Schaumbauteils auf bestimmten Stellen der Oberfläche mit dieser Methode nicht realisierbar.

Das neueste bekannte Verfahren der Verstärkung der Oberflächen von Zellulannaterialien ist eine Methode, bei welcher ein Sandwich mit Zellularkern so erzeugt wird, dass dieser Kern auf einer oder beiden Oberflächen mit einem Deckblech, einer Deckfolie, eventuell mit einer Verstärkung anderer Art verklebt oder verlötet wird. Der Nachteil dieser Methode liegt darin, dass Klebstoff oder Lotmittel unbedingt angewendet werden müssen, was die Temperaturstabilität des erzeugten Bauteiles beträchtlich begrenzt, seine Korrosionsbeständigkeit senkt und die Fertigungskosten steigert. Während des Härtens des Klebstoffes oder des Lotes muss die Verstärkung zur Oberfläche des Kernes ständig angedrückt werden, womit der Arbeitstakt verlängert wird und sich die Fertigungskosten wesentlich erhöhen.

### Offenbarung der Erfindung

### Technisches Problem

Es ist Aufgabe der vorliegenden Erfindung, die erwähnten Probleme bei den bekannten Herstellungsverfahren des Bauteiles aus verformbarem Zellularmaterial zu lösen.

### Technische Lösung

Die Grundlage dieser Methode gemäß Anspruch 1 besteht darin, dass in die Oberfläche des Bauteils aus verformbarem Zellularmaterial, welches ein Metallschaum ist, wenigstens eine Verstärkung eingepresst wird, deren Flächenprojektion auf die Oberfläche des Bauteils kleiner als die zu verstärkende Bauteiloberfläche ist, wobei sich ein Teil des Bauteils unter der eingedrückten Verstärkung und in ihrer unmittelbaren Umgebung deformiert und so wenigstens teilweise die Verstärkung umspannt, sodass sie durch die entstandenen elastischen Spannungen am Zellularmaterial mechanisch befestigt wird.

Das Zellularmaterial, welches diese Erfindung betrifft, ist ein poröses Material, in welchem die Gasporen mindestens 60 % seines Raumvolumens bilden. Das verformbare Zellularmaterial ist solches, bei welchem die Bruchdehnung des Materials der Zellwände mindestens 2% beträgt, z. B. aus Aluminium, Magnesium, Zink, Kupfer, Titan und ähnlichen Metallen und deren Legierungen erzeugter Metallschaum.

Die Verstärkung, mit der sich laut der vorgelegten Erfindung die Oberfläche des verformbaren Zellularmaterials verfestigt, kann die Form eines Gitters, eines Netzes, eines Gewebes, eines Siebes, eines Streckmetalls, eines Lochblechs, eines Drahtes, einer Faser, einer Stange oder irgendeines anderen Profils mit geschlossenem oder offenem Querschnitt aus festem Material haben. Dabei ist es wichtig, dass die Flächen-projektion der Verstärkung kleiner als die Oberfläche des Zellularmaterials ist, in welche die Verstärkung eingedrückt wird. Das Material der Verstärkung kann gleiche oder unterschiedliche chemische Zusammensetzung wie das Halbzeug aus dem verformbaren Zellularmaterial aufweisen.

Wenn das verformbare Zellularmaterial, das insbesondere ein Metallschaum ist, mit einem Hohlprofil, z. B. einem Rohr, verstärkt wird, kann gemäß der vorliegenden Erfindung diese Verstärkung zum Durchfluss von Gasen, Flüssigkeiten oder Mischungen von Gas und Feststoff oder von Flüssigkeit und Feststoff oder von Gas und Flüssigkeit verwendet werden, wobei der Feststoff in Form fester Teilchen, eines Pulvers, eines Granulats oder ihrer Mischungen vorliegen kann. Das in den Hohlprofilen strömende Medium kann zur Kühlung oder Erwärmung der Schaumbauteile dienen.

Die Verstärkung wird gemäß der vorliegenden Erfindung in die Oberfläche des verformbaren Zellularmaterials durch Einpressen, Einwalzen, Einschießen oder auf eine andere Weise eingedrückt, wobei die notwendige Eindruckkraft den Widerstand des Zellularmaterials überwinden und seine dauerhafte plastische Verformung unter der eingedrückten Verstärkung und eventuell in ihrer unmittelbaren Umgebung bewirken muss. Während des Eindrückens der Verstärkung in die Oberfläche des Bauteiles wird ein Teil des verformbaren Zellularmaterials plastisch verformt derart, dass das Material der Zellwände an der Verstärkung anhaftet und nach Beendigung der Wirkung der Druckkraft die Verstärkung durch die elastischen Restspannungen im zellularen Material mit diesem mechanisch verbunden bleibt.

Die Verstärkung kann gemäß dieser Erfindung in die Oberfläche des Bauteils aus verformbarem Zellularmaterial in mehreren Schritten eingepresst werden, wobei man die Verstärkung zunächst mit Hilfe eines geformten Stempels oder einer Walze so tief in die Oberfläche des Bauteils einprägt, dass sie in einer folgenden formgebenden Operation mit Hilfe eines Werkzeugs anderer Form durch plastisch deformiertes Material der Zellwände, das sie nach erstem Einpressen überragte, überdecken kann.

Die Festigkeit der gegenseitigen Verbindung zwischen der Verstärkung und dem Zellularmaterial kann gemäß dieser Erfindung dadurch erhöht werden, dass vor dem Einpressen auf die Verstärkung oder auf die Oberfläche des verformbaren Zellularmaterials ein Klebstoff oder ein für das Löten beider Materialtypen geeignetes Lötmaterial aufgetragen wird. Nach dem Eindrücken der Verstärkung in die Oberfläche des Zellularmaterials kann der Klebstoff in der Grenzschicht zwischen der Verstärkung und dem Zellularmaterial entweder von selbst oder unter der Wirkung der erhöhten Temperatur, auf die man das Zellularmaterial mit so eingedrückter Verstärkung erwärmt, aushärten. Im Falle der Anwendung eines Lots schmilzt dieses nach dem Eindrücken der Verstärkung in das Zellulartnaterial durch die Aufwärmung des Bauteiles auf die zugehörige Löttemperatur, wobei es zu einer Diffusionsverbindung des Lots und der gelöteten Materialien kommt Nach dem Erstarren des Lots wird die Verstärkung mit den Wänden des Zellularmaterials fest verlötet. Vor der Eindruckoperation kann die Oberfläche des Zellularmaterials oder der Verstärkung durch bekannte Verfahren oberflächig behandelt werden, damit man nach Aushärten des Klebstoffes oder Erstarren des Lots die optimale Bindungsfestigkeit erreicht. Den Prozess des Eindrückens der Verstärkung in das Halbzeug kann auch bei der Löttemperatur verwirklicht werden, wobei sich das auf die Verstärkung oder auf die Oberfläche des Zellularmaterials aufgetragene und geschmolzene Lot mit der Oberfläche des anderen Materials während des Eindruckprozesses metallurgisch durch Diffusion verbindet. Dieses Verfahren kann man vorteilhaft dann ausnutzen, wenn es notwendig wird, während des Lötens die Oxidschicht auf der Oberfläche der zusammenzulötenden Materialien mechanisch zu beschädigen, damit es zu einer Diffusions-verbindung kommen kann. Die Oberflächenoxide werden durch die Wirkung der gegenseitigen Reibung zwischen den einzelnen Materialen beim Eindrücken beschädigt. Das Festhalten der Verstärkung im Zellularmaterial durch die Wirkung einer äußeren Kraft während des Aushärtens des Klebstoffes oder des Erstarrens des Lots ist gemäß der vorliegenden Erfindung nicht notwendig.

Die Festigkeit der gegenseitigen Verbindung zwischen der Verstärkung und dem Zellularmaterial kann man laut dieser Erfindung auch dadurch erhöhen, dass eine Verstärkung aus einem Material verwendet wird, welches im Kontakt mit dem Zellularmaterial eine Diffusionsverbindung bildet. Die Bildung einer Diffusionsverbindung kann man unterstützen durch das Eindrücken der Verstärkung in das Zellularmaterial bei einer erhöhten Temperatur, welche für die optimale Bildung solcher Diffusionsverbindung geeignet ist, eventuell durch das Erwärmen des Bauteiles auf solche Temperatur nach dem Eindrücken der Verstärkung.

Das Herstellungsverfahren gemäß der vorliegenden Erfindung ermöglicht die Verfestigung der Oberfläche beliebig geformter Bauteile aus Zellularmaterial, welche durch das Gießen eines Zellularmaterials in die Form, Aufschäumen in der Form, mechanische Bearbeitung des Zellularmaterials oder durch andere Umformmethoden des Zellularmaterials entstanden sind.

An die Oberfläche des Bauteiles aus verformbarem Zellularmaterial, welches mit einer Verstärkung gemäß der vorliegenden Erfindung verfestigt wird, kann man durch bekannte Verbindungstechnologien einen weiteren Bauteil aus gleichem oder anderem Material anfügen. Die verstärkte Oberfläche kann eventuell mit einem flüssigen Überzug oder mit einem Klebstoff abgedeckt werden, der nach seinem Erstarren bzw. Aushärten eine kompakte Oberflächenschicht auf der Bauteiloberfläche bildet.

### Kurze Beschreibung von Zeichnungen

Die Erfindung wird anhand der beiliegenden Figuren näher erläutert. Es zeigt:

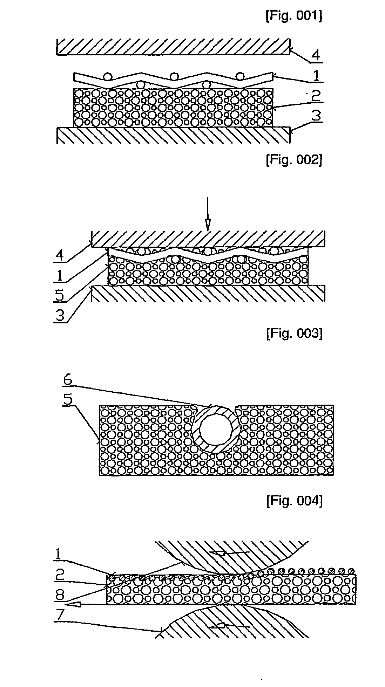

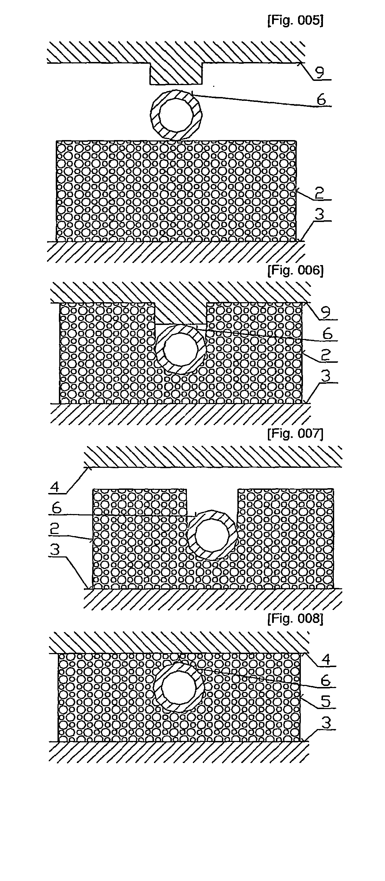

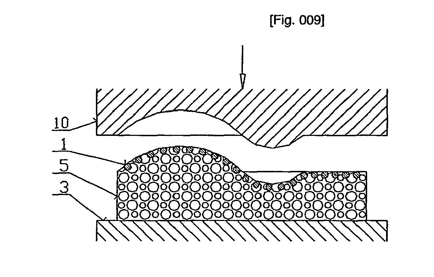

Fig. 1 das Einlegen einer Verstärkung auf die Oberfläche eines Bauteils aus verformbarem Zellularmaterial; Fig. 2 das Eindrücken der Verstärkung durch das Presswerkzeug in die Oberfläche des Bauteiles; Fig. 3 das eingepresste Hohlprofil; Fig. 4 das Prinzip des Eindrückens der Verstärkung in die Oberfläche des Bauteils aus dem verformbaren Zellularmaterial durch Walzen; Fig. 5-8 das Einpressen einer Verstärkung in der Form eines Hohlprofils in die Oberfläche des Bauteils aus dem verformbaren Zellularmaterial bei doppeltwirkendem Pressverfahren; und Fig. 9 das Prinzip der Verfestigung einer komplex geformten Oberfläche des Bauteils aus verformbarem Zellularmaterial durch Einpressen der Verstärkung in seine Oberfläche.

### Die beste Art und Weise, die Erfindung auszunutzen

Beispiel 1:

Der Bauteil aus Aluminiumschaum 2 hat die Form eines Quaders der Größe 100 mm x 60 mm x 20 mm, und seine Dichte beträgt 0,4 g/cm³. Er liegt auf dem unteren Stempel 3 des Presswerkzeugs. Auf seine Oberfläche wird eine Verstärkung 1 aus einem Gitter aus Stahldraht mit Durchmesser 2 mm und mit Quadratmaschen der Maschenweite 7 mm und der Größe 60 mm x 60 mm aufgelegt, wie es in Fig. 1 dargestellt ist. Die obere Fläche dieses Bauteils entstand durch Schneiden des Gussteils aus Aluminiumschaum, und deswegen sind die Poren offen. Mit dem oberen Stempel 4 des Presswerkzeugs wird auf die Verstärkung 1 mit einer Kraft von 7000 N so gedrückt, dass die Verstärkung 1 damit in die Oberfläche des Halbzeugs 2 eindringt. Ein Teil der verstärkten Oberfläche unter der eingedrückten Verstärkung 1 und in ihrer unmittelbaren Umgebung hat sich dabei deformiert, zumindest teilweise wird die Verstärkung 1, wie es in Fig. 2 dargestellt ist, umspannt, und die entstandenen elastischen Spannungen haben die Verstärkung 1 am Aluminiumschaum 2 mechanisch befestigt.

Beispiel 2:

Es wird analog zu Beispiel 1 ein verstärkter Bauteil 5 hergestellt, jedoch wird als Verstärkung ein Stahlrohr 6,100 mm lang, mit einem Außendurchmesser von 12 mm und einer Rohrwandstärke von 2 mm verwendet, welches in die Oberfläche des Zellularmaterials aus Aluminiumschaum 2 in der Form eines Quaders der Größe 100 mm x 60 mm x 40 mm, dessen Dichte 0,4 g/cm³ beträgt, so eingepresst wird, dass sich ein Teil der verfestigten Oberfläche unter dem Stahlrohr 6 und in seiner unmittelbaren Umgebung deformiert, sodass das Rohr mindestens teilweise umspannt wird, wie es in Fig. 3 dargestellt ist, und die elastische Spannung das Rohr am Zellularmaterial aus Aluminiumschaum 2 befestigt.

Beispiel 3:

Fig. 4 stellt ein Herstellungsverfahren dar, bei welchem die Oberfläche des Aluminiumschaums 2 aus Beispiel 1 durch Einwalzen des Gitters aus Beispiel 1 verstärkt wurde. Diese Verstärkung 1 wird in diesem Falle vor dem Walzen auf die Oberfläche des Aluminiumschaums 2 gelegt. Mit dem Durchgang des Halbzeugs 2 und der Verstärkung 1 zwischen der unteren Stahlwalze 7 und der oberen Stahlwalze 8, deren Durchmesser jeweils 100 mm beträgt, wird die Verstärkung 1 in die Oberfläche des Aluminiumschaums 2 eingewalzt.

Beispiel 4:

Die Herstellung erfolgt analog wie im Beispiel 1, es wird aber vor dem Einpressen der Verstärkung 1 in die Oberfläche des Aluminiumschaums 2 die Verstärkung 1 mit einem Klebstoff bedeckt, welcher nach dem Eindrücken der Verstärkung 1 in den Schaum 2 in der Grenzschicht zwischen der Verstärkung 1 und dem Schaum 2 erstarrt und infolgedessen die Festigkeit der Verbindung der Verstärkung im Schaum erhöht.

Beispiel 5:

Fig. 5-8 stellen das Herstellungsverfahren dar, bei welchem der versteifte Bauteil durch doppeltwirkendes Einpressen eines Stahlrohres 6 hergestellt wird. In die Oberfläche des Aluminiumschaums 2, wie er im Beispiel 2 beschrieben wurde, wird mit dem oberen Formstempel 9 des Presswerkzeugs, der einen Vorsprung hat, ein Stahlrohr 6 (Außendurchmesser 12 mm, Rohrwandstärke 2 mm) 15 mm tief eingepresst (Fig. 5 und 6). Nach dem Anheben des oberen Formstempels 9 wird dieser durch einen Stempel 4 mit glatter Oberfläche (Fig. 7) ersetzt. Durch das nachfolgende Pressen mit diesem Stempel 4 wird das Stahlrohr 6 zumindest teilweise mit dem deformierten Aluminiumschaum überdeckt, sodass das Rohr im Aluminiumschaum 2 fest verbunden bleibt (Fig. 8).

Beispiel 6:

Dieses Beispiel ist analog zu Beispiel 5, jedoch wird vor dem Eindrücken des Stahlrohres 6 in den Aluminiumschaum 2 das Stahlrohr 6 mit einem Klebstoff bedeckt, welcher in der Folge in der Grenzschicht zwischen dem Stahlrohr 6 und dem Aluminiumschaum 2 erstarrt. Infolgedessen erhöht sich die Festigkeit der gegenseitigen Verbindung.

Beispiel 7:

Es wird ein Bauteil 5 aus Aluminiumschaum 2 hergestellt, in welchen eine Verstärkung 1, und zwar ein Streckmetall aus Edelstahl, eingepresst ist und das eine komplex geformte Oberfläche aufweist (siehe Fig. 9, wobei die gezeigte Oberfläche nur beispielhaft ist). Die Verstärkung 1 wird mit dem oberen geformten Stempel 10 des Presswerkzeugs in die komplex geformte Oberfläche des Schaums 2 so tief eingepresst, dass nach dem Anheben des Stempels 10 das Streckmetall durch deformiertes Zellwandmaterial mit dem Aluminiumschaum 2 mechanisch fest verbunden bleibt.

Beispiel 8:

Eine Platte aus Aluminiumschaum mit Abmessungen von 600 mm x 600 mm x 12 mm, in welche ein Alurohr mit einem Durchmesser von 8 mm nach dem Verfahren von Beispiel 2 eingepresst ist, wird für die Bodenheizung bzw. Bodenkühlung verwendet, wobei das Rohr zum Transport des Kühl- bzw. Heizmediums und der Schaum zur homogenen Verteilung der Wärme über die gesamte Oberfläche dient.

### Industrielle Anwendbarkeit

Die Erfindung wird zur Versteifung von Bauteilen aus Metallschäumen angewendet, bei welchem die optimale zweckmäßige Kombination der mechanischen Eigenschaften und der Geometrie der Verstärkung ermöglicht, dass die Verstärkung nach dem Eindrücken in die Oberfläche des verformbaren Zellularmaterials gemäß der vorliegenden Erfindung bei niedrigen FIerstellungskosten mit dem Zellularmaterial fest verbunden bleibt. Auf diese Weise hergestellte Bauteile erreichen hohe Festigkeit und Steifigkeit bei sehr niedrigem Gewicht, und darum kann man diese vorteilhaft anwenden in Verkehrsmitteln, in Wärmetauschern, in Leichtbaukonstruktionen sowie beim Bau verschiedener Maschinen und Geräte.

## Patentansprüche

1. Verfahren zur Versteifung eines Bauteils aus verformbarem Zellularmaterial mit einem von Gasporen eingenommenen Raumvolumenanteil von mindestens 30 % und einer Zellwandbruchdehnung von mindestens 2 %, bei dem die Oberfläche des Bauteils aus dem verformbarem Zellularmaterial (2) in zumindest einem Arbeitschritt schrittweise oder kontinuierlich wenigstens eine Verstärkung eingedrückt wird (1), deren Flächenprojektion auf die Oberfläche des Halbzeuges kleiner als die zu verstärkende Oberfläche des Bauteils ist, wobei sich ein Teil des Bauteils unter der eingedrückten Verstärkung (1) und in ihrer unmittelbaren Umgebung deformiert, **dadurch gekennzeichnet, dass** das verformbare Zellularmaterial (2) ein Metallschaum ist, der nach der Deformation die Verstärkung (1) teilweise umspannt, sodass diese durch die entstandenen elastischen Spannungen am Zellularmaterial (2) mechanisch befestigt wird.

2. Verfahren nach Anspruch 1, **dadurch gekennzeichnet, dass** als Verstärkung (1) ein Gitter, ein Netz, ein Gewebe, ein Sieb, ein Streckmetall, ein Lochblech, ein Draht, eine Faser, eine Stange, ein Hohlprofil mit geschlossenem Querschnitt (6) oder ein Profil mit offenem Querschnitt verwendet wird, die aus einem Material mit gleicher oder unterschiedlicher chemischer Zusammensetzung wie das verformbare Zellularmaterial (2) erzeugt sind.

3. Verfahren nach Anspruch 1 oder 2, **dadurch gekennzeichnet, dass** eine Verstärkung (1) aus einem Material, das in Verbindung mit dem Zellularmaterial (2) bei einer bestimmten Temperatur eine Diffusionsverbindung bildet, verwendet wird.

4. Verfahren nach einem der Ansprüche 1 bis 3, **dadurch gekennzeichnet, dass** das Eindrücken der Verstärkung (1) in das verformbare Zellularmaterial (2) bei erhöhter Temperatur ausgeführt wird, die aber niedriger als die Schmelztemperatur desjenigen Materials ist, aus dem das Zellularmaterial (2) erzeugt wurde.

5. Verfahren nach einem der Ansprüche 1 bis 4, **dadurch gekennzeichnet, dass** die Verstärkung (1) in die Oberfläche des Bauteils aus verformbarem Zellularmaterial (2) eingewalzt wird.

6. Verfahren nach einem der Ansprüche 1 bis 5, **dadurch gekennzeichnet, dass** die Verstärkung (1) in die Oberfläche des Bauteils aus verformbarem Zellularmaterial (2) in mehreren Schritten eingebracht wird, wobei zunächst mittels eines geformten Stempels (9) oder einer Walze die Verstärkung so tief in die Oberfläche des Halbzeugs eingedrückt wird, dass das Zellularmaterial die Verstärkung überragt, und dass in einer folgenden formgebenden Operation mit Hilfe eines Werkzeugs anderer Form (4) das Zellularmaterial, das die Verstärkung (1) überragt, plastisch deformiert wird, sodass es die Verstärkung (1) überdeckt.

7. Verfahren nach einem der Ansprüche 1 bis 6, **dadurch gekennzeichnet, dass** die Verstärkung in eine komplex geformte Oberfläche des Bauteils aus verformbarem Zellularmaterial eingepresst wird.

8. Verfahren nach einem der Ansprüche 1 bis 7, **dadurch gekennzeichnet, dass** vor dem Einpressen mindestens eine Oberfläche des Bauteils oder der Verstärkung mit einem Klebstoff bedeckt wird, der nach dem Einpressen der Verstärkung in die Oberfläche aus dem verformbaren Zellularmaterial zwischen der Verstärkung und dem Zellularmaterial aushärtet und damit die Festigkeit der gegenseitigen Verbindung erhöht.

9. Verfahren nach einem der Ansprüche 1 bis 7, **dadurch gekennzeichnet, dass** vor dem Einpressen mindestens eine Oberfläche des Bauteils und/oder der Verstärkung mit einem Lötmaterial bedeckt wird, wobei es nach dem Einpressen der Verstärkung in das Halbzeug zu einer Diffusionsverbindung zwischen dem Lot und den gelöteten Materialen kommt, welche die Festigkeit der gegenseitigen Verbindung erhöht.

10. Verfahren nach einem der Ansprüche 3, 8 oder 9, **dadurch gekennzeichnet, dass** nach dem Einpressen der Verstärkung der Bauteil auf eine Temperatur erwärmt wird, bei der es zur Bildung einer Diffusionsverbindung oder Lötverbindung zwischen dem Zellularmaterial und der Verstärkung bzw. zum Aushärten des Klebstoffes kommt.

11. Verfahren nach einem der Ansprüche 1 bis 10, **dadurch gekennzeichnet, dass** zur Oberfläche des Bauteiles aus verformbarem Zellularmaterial durch bekannte Verbindungstechnologien ein beliebiger weiterer Bauteil aus gleichem oder anderem Material beigefügt wird, oder dass die Oberfläche mit einem flüssigen Überzug oder mit einem Klebstoff abgedeckt wird, der nach seinem Erstarren bzw. Aushärten eine kompakte Oberflächenschicht auf der verstärkten Bauteiloberfläche bildet.

12. Konstruktionsbauteil aus verformbarem Zellularmaterial mit einem von Gasporen eingenommenen Raumvolumenanteil von mindestens 30 % und einer Zellwandbruchdehnung von mindestens 2 %, bei dem die Oberfläche des Bauteils aus dem verformbarem Zellularmaterial (2) wenigstens eine eingedrückte Verstärkung (1) enthält, deren Flächenprojektion auf die Oberfläche des Halbzeuges kleiner als die zu verstärkende Oberfläche des Bauteils ist, wobei ein Teil des Bauteils unter der eingedrückten Verstärkung (1) und in ihrer unmittelbaren Umgebung deformiert ist, **dadurch gekennzeichnet, dass** das verformbare Zellularmaterial (2) ein Metallschaum ist und durch ein Verfahren nach einem der Ansprüche 1 bis 11 erhalten wird.

13. Konstruktionsbauteil nach Anspruch 12, **dadurch gekennzeichnet, dass** mindestens ein Teil eine Verstärkung in Form eines Hohlprofils mit geschlossenem Querschnitt hat.

14. Verwendung des Konstruktionsbauteils nach Anspruch 13 für die Strömung verschiedener Medien wie Gas und/oder Flüssigkeit und/oder einer Mischung von Gas und Feststoff und/oder von Flüssigkeit und Feststoff und/oder von Gas und Flüssigkeit, wobei der Feststoff in der Form fester Teilchen, eines Pulvers, eines Granulats oder ihrer Mischung vorliegt.

15. Verwendung des Konstruktionsbauteils nach Anspruch 13 zur Kühlung oder Erwärmung.

## Claims

1. Method for stiffening a component made from deformable cellular material with a space volume proportion taken up by gas pores of at least 30% and a cell wall breaking elongation of at least 2%, in which into the surface of the component of the deformable cellular material (2), in at least one step either discontinuously or continuously, is pressed at least one reinforcement (1), whose area projection on the semifinished product surface is smaller than the component surface to be reinforced, part of the component being deformed under the pressed in reinforcement (1) and in the immediate environment thereof, **characterized in that** the deformable cellular material (2) is a metal foam, which partly transforms reinforcement (1) following deformation, so that said reinforcement (1) is mechanically fixed to cellular material (2) as a result of the occurring elastic stresses.

2. Method according to claim 1, **characterized in that** the reinforcement (10 is constituted by a grid, net, fabric, screen, metal mesh, perforated plate, wire, fibre, rod, hollow section with a closed cross-section (6) or a section with an open cross-section, made from a material with the same or different chemical composition to the deformable cellular material (2).

3. Method according to claim 1 or 2, **characterized in that** use is made of a reinforcement (1) made from a material which forms a diffusion connection in conjunction with the cellular material (2) at a specific temperature.

4. Method according to one of the claims 1 to 3, **characterized in that** the pressing of reinforcement (1) into the deformable cellular material (2) takes place at elevated temperature, but which is lower than the melting point of the material from which the cellular material (2) was produced.

5. Method according to one of the claims 1 to 4, **characterized in that** the reinforcement (1) is rolled into the surface of the component of deformable cellular material (2).

6. Method according to one of the claims 1 to 5, **characterized in that** the reinforcement (1) is introduced into the surface of the component of deformable cellular material (2) in a number of steps, where initially by means of a shaped die (9) or a roller the reinforcement is pressed so deeply into the semifinished product surface that the cellular material projects over the reinforcement, and that in a following, shaping operation using a differently shaped tool (4) the cellular material projecting over reinforcement (1) is plastically deformed, so that it covers said reinforcement (1).

7. Method according to one of the claims 1 to 6, **characterized in that** the reinforcement is pressed into the complexly shaped surface of the deformable cellular material component.

8. Method according to one of the claims 1 to 7, **characterized in that**, prior to pressing in, at least one surface of the component or the reinforcement is covered with an adhesive which, after pressing the reinforcement into the deformable cellular material surface, hardens between the reinforcement and the cellular material and consequently increases the strength of the mutual connection.

9. Method according to one of the claims 1 to 7, **characterized in that**, prior to pressing in, at least one surface of the component and/or the reinforcement is covered with a solder and after pressing the reinforcement into the semifinished product there is a diffusion connection between the solder and the soldered materials, which increases the strength of the mutual connection.

10. Method according to one of the claims 3,8 or 9, **characterized in that**, after pressing in the reinforcement, the component is heated to a temperature at which there is a diffusion connection or soldered connection between the cellular material and the reinforcement or the complete hardening of the adhesive.

11. Method according to one of the claims 1 to 10, **characterized in that** a random, further component of the same or a different material is added to the surface of the deformable cellular material component using known connecting technologies, or that the surface is covered with a liquid coating or an adhesive which, after solidification or complete hardening, forms a compact surface layer on the reinforced component surface.

12. Construction component made from deformable cellular material with a space volume proportion of at least 30% taken up by gas pores and a cell wall breaking elongation of at least 2%, in which the surface of the component of the deformable cellular material (2) contains at least one pressed in reinforcement (1), whose area projection on the semifinished product surface is smaller than the component surface to be reinforced, part of the component being deformed under the pressed in reinforcement (1) and in the immediate environment thereof, **characterized in that** the deformable cellular material (2) is a metal foam obtained by a method according to one of the claims 1 to 11.

13. Construction component according to claim 12, **characterized in that** at least part of the reinforcement is in the form of a hollow section with a closed cross-section.

14. Use of the construction component according to claim 13 for the flow passage of different media such as a gas and/or liquid and/or a mixture of gas and solid and/or liquid and solid and/or gas and liquid, the solid being in the form of solid particles, a powder, a granulate or mixtures thereof.

15. Use of the construction component according to claim 13 for cooling or heating.

## Revendications

1. Procédé pour rigidifier un composant constitué d'une matière cellulaire déformable avec une proportion volume-espace occupée par des pores de gaz d'au moins 30 % et un allongement à la rupture de la paroi cellulaire d'au moins 2 %, dans laquelle au moins un renfort (1) est enfoncé par étapes ou en continu dans la surface du composant constitué de matière cellulaire déformable (2) dans au moins une phase de travail, dont la projection de surface sur la surface du demi-produit est plus petite que la surface à renforcer du composant, sachant qu'une partie du composant se déforme sous le renfort enfoncé (1) et dans son environnement direct ou immédiat, **caractérisé en ce que** la matière cellulaire déformable (2) est une mousse métallique, qui fait partiellement le tour du renfort (1) après déformation, de sorte que celui-ci est fixé mécaniquement à la matière cellulaire (2) par les tensions élastiques qui en résultent.

2. Procédé selon la revendication 1, **caractérisé en ce que** comme renfort (1) on utilise un grillage, un filet, un tissu, un crible, un métal déployé, une tôle perforée, un fil métallique, une fibre, une tige, un profil creux avec une section fermée (6) ou un profil avec une section ouverte, qui sont produits dans une matière dont la composition chimique est identique ou différente de la matière cellulaire déformable (2).

3. Procédé selon la revendication 1 ou 2, **caractérisé en ce qu'**on utilise un renfort (1) constitué d'une matière qui forme, à une certaine température, une jonction par diffusion en liaison ou contact avec la matière cellulaire (2).

4. Procédé selon l'une quelconque des revendications 1 à 3, **caractérisé en ce que** l'enfoncement du renfort (1) dans la matière cellulaire déformable (2) est réalisé à une température plus élevée, mais qui est inférieure à la température de fusion de la matière à partir de laquelle a été produite la matière cellulaire (2).

5. Procédé selon l'une quelconque des revendications 1 à 4, **caractérisé en ce que** le renfort (1) est laminé dans la surface du composant constitué de matière cellulaire déformable (2).

6. Procédé selon l'une quelconque des revendications 1 à 5, **caractérisé en ce que** le renfort (1) est introduit dans la surface du composant constitué de matière cellulaire déformable (2) en plusieurs étapes, sachant que dans un premier temps le renfort est enfoncé dans la surface du demi-produit à l'aide d'un piston façonné (9) ou d'un rouleau, à une profondeur telle que la matière cellulaire déborde du renfort et que dans une opération ultérieure de façonnage à l'aide d'un outil d'une autre forme (4) la matière cellulaire qui déborde du renfort (1) est plastiquement déformée, de sorte qu'elle recouvre le renfort (1).

7. Procédé selon l'une quelconque des revendications 1 à 6, **caractérisé en ce que** le renfort (1) est enfoncé dans une surface moulée ou formée de manière complexe du composant constitué de matière cellulaire déformable.

8. Procédé selon l'une quelconque des revendications 1 à 7, **caractérisé en ce que**, avant l'introduction par pressage, au moins une surface du composant ou du renfort est recouvert d'une colle, qui durcit après l'introduction par pressage du renfort dans la surface en matière cellulaire déformable entre le renfort et la matière cellulaire et de ce fait augmente la résistance de la jonction réciproque.

9. Procédé selon l'une quelconque des revendications 1 à 7, **caractérisé en ce que**, avant l'introduction par pressage, au moins une surface du composant et/ou du renfort est recouverte d'une matière de brasage ou de soudure, sachant qu'après l'introduction par pressage du renfort dans le demi-produit, une jonction par diffusion se produit entre la soudure et les matières soudées, qui augmente la résistance de la jonction réciproque.

10. Procédé selon l'une quelconque des revendications 3, 8 ou 9, **caractérisé en ce que**, après l'introduction par pressage du renfort le composant est chauffé à une température à laquelle se produit une formation d'une jonction par diffusion ou d'une jonction par brasage entre la matière cellulaire et le renfort ou le durcissement de la colle.

11. Procédé selon l'une quelconque des revendications 1 à 10, **caractérisé en ce qu'**un autre composant quelconque constitué d'une matière identique ou différente est ajouté à la surface du composant constitué de matière cellulaire déformable par des technologies de jonction connues ou **en ce que** la surface est recouverte d'un enrobage fluide ou d'une colle, qui forme, après sa solidification ou son durcissement, une couche de surface compacte sur la surface renforcée du composant.

12. Elément de construction en matière cellulaire déformable avec une proportion volume-espace occupée par des pores de gaz d'au moins 30 % et un allongement à la rupture de la paroi cellulaire d'au moins 2 %, où la surface du composant constitué de matière cellulaire déformable (2) contient au moins un renfort (1) introduit par pression ou enfoncé dont la projection de surface sur la surface du demi-produit est plus petite que la surface à renforcer du composant, une partie du composant étant déformée sous le renfort enfoncé (1) et dans son environnement direct ou immédiat, **caractérisé en ce que** la matière cellulaire déformable (2) est une mousse métallique et est obtenue par un procédé selon l'une quelconque des revendications 1 à 11.

13. Elément de construction selon la revendication 12, **caractérisé en ce qu'**au moins une partie a un renfort en forme de profil creux avec une section fermée.

14. Utilisation de l'élément de construction selon la revendication 13 pour l'écoulement de différents milieux comme du gaz et/ou du liquide et/ou un mélange de gaz et de solide et/ou de liquide et de solide et/ou de gaz et de liquide, le solide se présentant sous la forme de particules solides, d'une poudre, d'un granulé ou de leur mélange.

15. Utilisation d'un élément de construction selon la revendication 13 pour le refroidissement ou le réchauffement.
